# FASCICULE DE BREVET EUROPEEN

(11) **EP 3 099 993 B1**
(45) Date de publication et mention de la délivrance du brevet: **04.04.2018**
(21) Numéro de dépôt: 15702393.8
(22) Date de dépôt: 16.01.2015
(51) Int. Cl.: F28D 20/02, F28F 27/00, F28F 19/00

(54) **CORPS D'ABSORPTION POUR CAPSULE CONTENANT UN MATÉRIAU À CHANGEMENT DE PHASE**
SAUGFÄHIGER KÖRPER FÜR EINE KAPSEL MIT EINEM PHASENVERÄNDERLICHEN MATERIAL
ABSORPTION BODY FOR A CAPSULE CONTAINING A PHASE-CHANGE MATERIAL

(30) Priorité: 29.01.2014 FR 1450708
(43) Date de publication de la demande: 07.12.2016
(73) Titulaire: Cryogel, 75011 Paris (FR)
(72) Inventeur: PATRY, Jean, F-75004 Paris (FR)
(74) Mandataire: Decorchemont, Audrey Véronique Christèle
(86) Numéro de dépôt international: PCT/EP2015/050757
(87) Numéro de publication internationale: WO 2015/113837

(56) Documents cités:
- US-A- 4 931 333
- US-A- 5 804 297

## Description

La présente invention concerne un corps d'absorption pour une capsule (également appelée corps de remplissage) contenant un matériau à changement de phase (en abrégé MCP), en particulier un agent de stockage d'énergie à forte chaleur latente de fusion/solidification tel que de l'eau ou des eutectiques de sels hydratés, une capsule équipée d'un tel corps d'absorption. L'invention porte encore sur la façon de conditionner ladite capsule.

### ARRIERE-PLAN TECHNOLOGIQUE DE L'INVENTION

On connaît des installations frigorifiques comportant un circuit fermé dans lequel un fluide caloporteur (par exemple de l'eau glycolée) est forcé à circuler entre des capsules remplies de matériau à changement de phase et empilées dans une cuve (en acier ou en béton) puis amené vers la zone à refroidir (technologie dite « MCP encapsulé »). Plus la paroi des capsules est mince, meilleur est le coefficient de transfert thermique des capsules vers le fluide caloporteur. Pendant la phase dite de « charge du stockage », Le fluide caloporteur, refroidi par un compresseur frigorifique, circule dans la cuve à une température inférieure à la température de changement d'état du matériau à changement de phase contenu dans les capsules ce qui a pour effet de solidifier le matériau à changement de phase contenu dans les capsules et donc de stocker une certaine quantité d'énergie frigorifique. Pendant la phase dite de « décharge du stockage », le fluide caloporteur circule dans la cuve et, au contact des capsules remplies du MCP solidifié, prélève l'énergie frigorifique accumulée et la transfère vers la zone à refroidir. Cette circulation provoque la fonte progressive du matériau à changement de phase dans les capsules, ce qui impose de faire revenir périodiquement le matériau à changement de phase à l'état solide (ce qui est effectué pendant les phases de charge du stockage).

Certains matériaux à changement de phase, notamment l'eau, occupent un volume plus important dans l'état solide que dans l'état liquide, et il importe que la capsule puisse absorber cette augmentation de volume sans dommage. Une solution immédiate consiste à remplir partiellement la capsule avec le matériau à changement de phase, le complément de volume étant occupé par de l'air et formant un volume libre qui peut être occupé au fur et à mesure de la solidification du matériau à changement de phase, au prix d'une augmentation de pression dans la capsule. Bien que simple à mettre en oeuvre, cette solution présente l'inconvénient d'engendrer un étirement de la paroi mince de la capsule dans une zone de moindre résistance, et de permettre une déformation de l'enveloppe de la capsule par formation d'une cuvette dans une zone de moindre résistance de l'enveloppe sous l'effet de la pression du fluide caloporteur.

La répétition de ces déformations induit une fragilisation de l'enveloppe qui peut finir par céder.

Le document FR2609536 décrit une capsule entièrement remplie de matériau à changement de phase et comportant une enveloppe souple qui présente des formes creuses en cuvettes pouvant être repoussées par le matériau à changement de phase lors de sa solidification, ce qui permet une augmentation du volume interne de la capsule.. Comme auparavant, la répétition des déformations de l'enveloppe finit par fragiliser celle-ci.

Le document FR2732453 décrit quant à lui une capsule à enveloppe mince et rigide renfermant un corps d'absorption sphérique maintenu au centre de la capsule et occupant une partie du volume interne de la capsule. Le volume interne de la capsule, qui est donc diminué du volume propre du corps d'absorption, est entièrement rempli de matériau à changement de phase. Le corps d'absorption est compressible et donc apte à être comprimé par le matériau à changement de phase lors de sa solidification de sorte à absorber l'augmentation de volume dudit matériau. La forme sphérique du corps d'expansion associé à la forme sphérique de la capsule conduit à une solidification du matériau à changement de phase de la périphérie vers le centre de la capsule sans fluage, évitant ainsi la création de contraintes internes néfastes. Cependant, la mise en place et le maintien d'un tel corps d'absorption au centre de la capsule est délicat.

Le document US 4 931 333 décrit une capsule pour installation frigorifique selon le préambule de la revendicatio 1.

### OBJET DE L'INVENTION

Un but de l'invention est de proposer un corps d'absorption de forme et de mise en oeuvre simple, facilement utilisable en conjonction avec une capsule à enveloppe sphérique.

### PRESENTATION DE L'INVENTION

En vue de la réalisation de ce but, on propose une capsule selon l'énoncé de la revendication 1. En donnant au corps d'absorption une longueur sensiblement égale à un diamètre interne d'une capsule sphérique, celui-ci se cale naturellement dans la capsule en s'étendant selon un axe diamétral de celle-ci, ce qui préserve une symétrie de révolution du volume interne de la capsule. Lors d'une phase de solidification, le matériau à changement de phase commence à se solidifier à proximité de l'enveloppe de la capsule, ce qui emprisonne et immobilise les extrémités du corps d'absorption et l'empêche de bouger à l'intérieur de la capsule, évitant ainsi que ses mouvements ne perturbent la solidification du matériau à changement de phase. Au fur et à mesure de la solidification, le corps d'absorption est progressivement compressé et libère ainsi du volume pour absorber l'augmentation de volume du matériau à changement de phase. Selon l'invention, la capsule a une enveloppe généralement sphérique équipée du corps d'absorption oblong de l'invention, l'enveloppe de la capsule ayant un diamètre interne sensiblement égal à une longueur du corps d'absorption de l'invention. On propose également une capsule comportant un orifice de remplissage de forme circulaire ayant un diamètre légèrement supérieur à un diamètre du corps d'absorption oblong. La mise en place du corps d'absorption dans la capsule est ainsi très grandement facilitée.

L'enveloppe de la capsule pourra être lisse ou comporter des reliefs propres à favoriser les échanges de chaleur entre le matériau à changement de phase et le fluide caloporteur qui vient au contact des capsules. Par ailleurs, l'expression « enveloppe généralement sphérique » englobe des enveloppes dont la forme générale rappelle celle d'une sphère, sans pour autant que celle-ci soit nécessairement rigoureusement sphérique. En particulier, les enveloppes pourront comporter des formes en creux.

Selon un aspect de l'invention, le conditionnement de ladite capsule comporte les étapes de :
- introduire le corps d'absorption oblong dans la capsule par une ouverture de celle-ci ;
- faire pivoter le corps d'absorption pour libérer l'ouverture de la capsule ;
- remplir la capsule de matériau à changement de phase par l'ouverture ;
- boucher l'orifice de la capsule.

Selon une variante de l'invention, le corps d'absorption oblong est associé à un capteur de pression adapté à mesurer la pression du gaz enfermé dans le corps d'absorption.

### BREVE DESCRIPTION DES FIGURES

L'invention sera mieux comprise à la lumière de la description qui suit en référence aux figures des dessins annexés parmi lesquelles :
- la figure 1 est une vue en perspective d'un corps d'absorption oblong selon l'invention ;
- les figures 2a à 2c sont des figures schématiques illustrant les différentes étapes du conditionnement d'une capsule selon l'invention avec le corps d'absorption de la figure 1;
- la figure 3 est une vue en perspective de la capsule des figures 2a à 2c dont le matériau de changement de phase est en cours de solidification au contact de la paroi de la capsule ;
- la figure 4 est une vue en perspective d'un corps d'absorption selon une variante de réalisation de l'invention ;
- Les figures 5a à 5c sont des figures schématiques illustrant les différentes étapes du conditionnement d'une capsule selon l'invention avec le corps d'absorption de la figure 4.

### DESCRIPTION DETAILLEE D'UN MODE DE REALISATION DE L'INVENTION

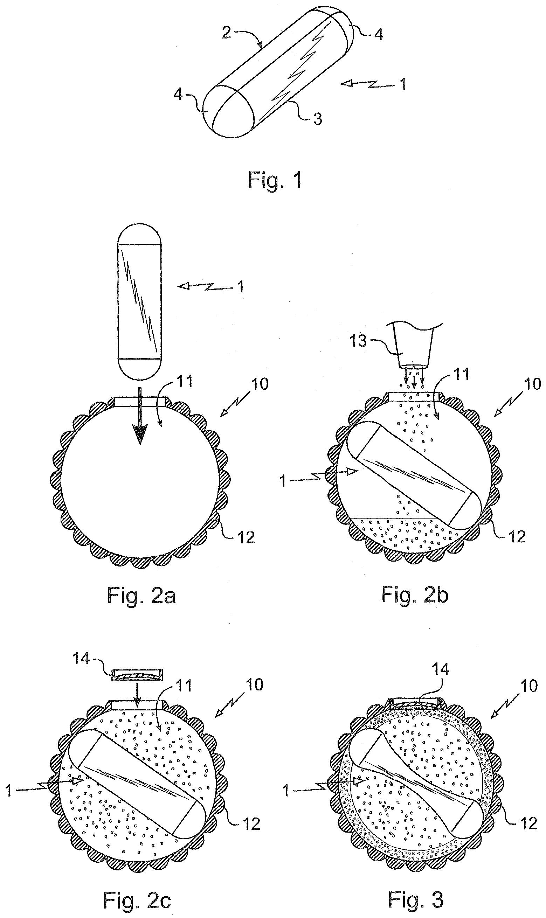

La figure 1 illustre un corps d'absorption 1 selon l'invention qui comporte une enveloppe 2 en matériau souple. L'enveloppe 2 a une forme oblongue, avec une partie courante cylindrique 3 de section circulaire terminée par des extrémités semi-sphériques 4. L'enveloppe 2 est étanche et contient un gaz, par exemple de l'air à la pression atmosphérique. Son matériau est choisi pour empêcher les transferts osmotiques entre l'intérieur et l'extérieur du corps d'absorption 1 et présenter une grande résistance au pincement. On pourra par exemple utiliser un matériau à base d'éthylène-acétate de vinyle (en abrégé EVA pour Ethylen-vinyl acetate). Un tel corps d'absorption peut être produit par soufflage ou par tout autre procédé adéquat.

Un tel corps d'absorption s'utilise de la façon illustrée aux figures 2a à 2c.

Dans une première étape illustré à la figure 2a, le corps d'absorption 1 est introduit dans une capsule 10 par une ouverture 11, dont le diamètre est légèrement supérieur à un diamètre de la partie courante 3 du corps d'absorption 1. Ici, l'enveloppe 12 comporte des reliefs sur sa paroi externe, mais la forme générale de l'enveloppe 12 pourra présenter toutes formes imaginables du moment qu'elle soit généralement sphérique.

Puis comme illustré à la figure 2b, le corps d'absorption 1 est pivoté dans la capsule 10 pour dégager l'ouverture 11 et faciliter le remplissage de la capsule 10 avec un matériau à changement de phase à l'état liquide (illustré par des petits points) au moyen d'un verseur 13. On constate que le corps d'absorption 1 a une longueur sensiblement égale à un diamètre interne de la capsule 10 de sorte que le corps d'absorption 1 s'étend naturellement selon un axe diamétral de la capsule 10.

Enfin, comme illustré à la figure 2c, la capsule 10 est ensuite refermée par un bouchon 14. La capsule ainsi conditionnée est prête à être empilée avec d'autres capsules dans la cuve d'une installation de refroidissement.

La figure 3 illustre la façon dont le corps d'absorption 1 se comprime lors de la solidification du matériau à changement de phase. La solidification commence au contact de l'enveloppe 12, (la partie solidifiée est illustrée par des points plus rapprochés) et emprisonne les extrémités du corps d'absorption 1. La partie courante de celui-ci se comprime au fur et à mesure de l'augmentation de volume du matériau à changement de phase. La pression interne dans le corps d'absorption augmente en conséquence. Inversement, lors de la fonte du matériau à changement de phase, le corps d'absorption exerce une pression sur le matériau à changement de phase et lorsque celui-ci est suffisamment fondu, le corps d'absorption contribue à briser les cristaux résiduels et ainsi augmenter la surface d'échange liquide/solide.

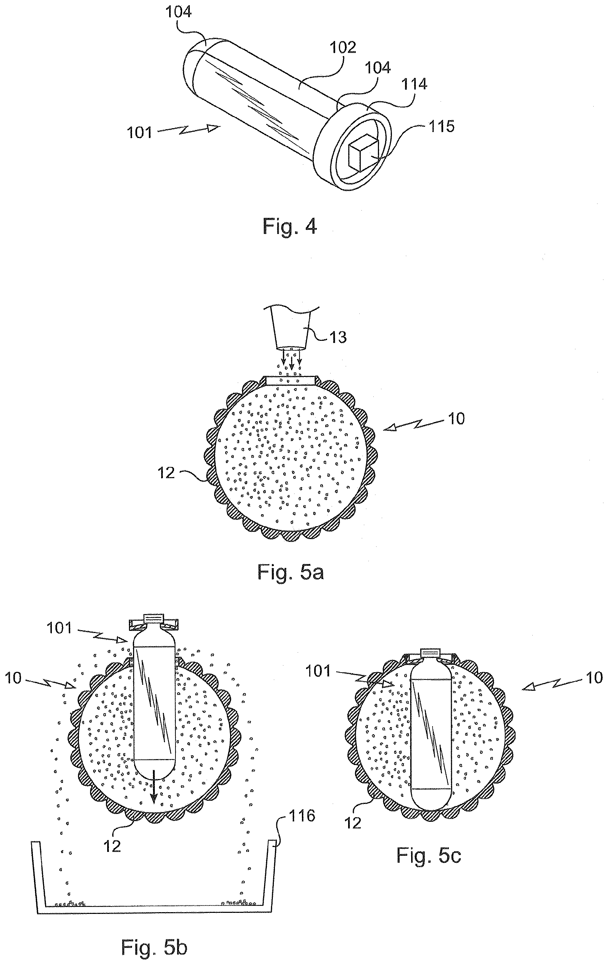

Selon une variante de réalisation de l'invention illustré à la figure 4, le corps d'absorption 101 comporte toujours une enveloppe de forme oblongue comme précédemment. Cependant, l'une des extrémités 114 est ouverte et adaptée à recevoir un capteur de pression 115 pour mesurer la pression interne du corps d'absorption 101, par exemple un capteur de type RFID pouvant être interrogé à distance. Ici, le capteur est disposé en pratique porté par le bouchon 114, le corps d'absorption étant solidarisé audit bouchon pour former un ensemble unitaire aisément manipulable.

Un tel corps d'absorption s'utilise de la façon illustrée aux figures 5a à 5c.

Comme illustré à la figure 5a, La capsule 10 est tout d'abord remplie de matériau à changement de phase à l'état liquide.

Puis comme illustré à la figure 5b, l'ensemble composé du corps d'absorption 101, du bouchon 114et du capteur 115 est mis en place sur la capsule, ce qui provoque le débordement d'une certaine quantité de matériau à changement de phase qui est récupéré dans un bac 116. La figure 5c illustre a capsule entièrement conditionnée et prête à l'usage.

Typiquement, pour une capsule dont le diamètre interne est de 130 millimètres, on prévoira un corps d'absorption d'une longueur de 130 millimètres pour un diamètre de partie courante de 35 millimètres.

Typiquement, le diamètre de la partie courante du corps d'absorption sera choisi de sorte que lorsque le matériau à changement de phase contenu dans la capsule est entièrement solidifié, la pression à l'intérieur du corps d'absorption soit inférieure ou égale à trois bars.

L'invention n'est pas limitée à ce qui vient d'être décrit, mais englobe au contraire toute variante entrant dans le cadre défini par les revendications.

## Revendications

1. Capsule pour installation frigorifique comprenant une enveloppe (12) de forme généralement sphérique remplie de matériau changement de phase.
**caractérisée en ce que** la capsule renferme un corps d'absorption (1 ; 101) oblong comportant une enveloppe (2;102) souple remplie de gaz avec une partie courante de forme généralement cylindrique de section circulaire terminée par des extrémités semi-sphériques, le corps d'absorption (1 ; 101) ayant une longueur sensiblement égale à un diamètre interne de l'enveloppe de la capsule.

2. Capsule selon la revendication 1, dans laquelle l'enveloppe de la capsule comporte une ouverture ayant un diamètre légèrement supérieur à un diamètre de la partie courante du corps d'absorption.

3. Capsule selon la revendication 1, dans lequel l'enveloppe du corps d'absorption est réalisée dans un matériau à base d'éthylène-acétate de vinyle.

4. Capsule selon l'une des revendications précédentes, dans laquelle le corps d'absorption (1 ;101) est associé par l'une de ses extrémités à un capteur de pression (115) adapté à mesurer une pression interne du corps d'absorption.

5. Capsule selon la revendication 4, dans laquelle le corps d'absorption (1 ; 101) est associé à un bouchon (114) de fermeture de la capsule dans lequel il est introduit.

6. Installation frigorifique mettant en oeuvre des capsules selon l'une quelconque des revendications précédentes.

7. Procédé de conditionnement d'une capsule selon l'une des revendications 1 à 5 comprenant les étapes de :
- introduire le corps d'absorption oblong dans la capsule par l'ouverture de celle-ci ;
- faire pivoter le corps d'absorption pour libérer l'ouverture de la capsule ;
- remplir la capsule de matériau à changement de phase par l'ouverture ;
- boucher l'orifice de la capsule.

8. Procédé de conditionnement d'une capsule selon la revendication 4 et la revendication 5 comprenant les étapes de :
- remplir une capsule de matériau à changement de phase par une ouverture de celle-ci ;
- introduire dans la capsule un ensemble comprenant un corps d'absorption oblong (101) muni du capteur de pression (115) et de son bouchon (114), jusqu'à boucher l'ouverture de la capsule avec ledit bouchon.

## Patentansprüche

1. Kapsel für eine Kühlanlage, umfassend eine im Allgemeinen kugelförmige Umhüllung (12), die mit einem Phasenwechselmaterial gefüllt ist, **dadurch gekennzeichnet, dass** die Kapsel einen länglichen Absorptionskörper (1; 101) enthält, der eine weiche, mit Gas gefüllte Hülle (2; 102) umfasst, mit einem laufenden Abschnitt mit einer im Allgemeinen zylindrischen Form mit einem kreisförmigen Querschnitt, der mit halbkugelförmigen Enden abschließt, wobei der Absorptionskörper (1; 101) eine Länge hat, die im Wesentlichen gleich einem Innendurchmesser der Umhüllung der Kapsel ist.

2. Kapsel nach Anspruch 1, bei der die Umhüllung der Kapsel eine Öffnung umfasst, die einen Durchmesser hat, der etwas größer als ein Durchmesser des laufenden Abschnittes des Absorptionskörpers ist.

3. Kapsel nach Anspruch 1, bei der die Hülle des Absorptionskörpers aus einem Material auf Ethylen-Vinylacetat-Basis hergestellt ist.

4. Kapsel nach einem der vorhergehenden Ansprüche, bei der der Absorptionskörper (1; 101) über eines seiner Enden mit einem Drucksensor (115) verbunden ist, der dazu geeignet ist, einen Innendruck des Absorptionskörpers zu messen.

5. Kapsel nach Anspruch 4, bei der der Absorptionskörper (1; 101) mit einem Verschlussstopfen (114) zum Verschließen der Kapsel, in die er eingeführt ist, verbunden ist.

6. Kühlanlage, die Kapseln nach einem der vorhergehenden Ansprüche verwendet.

7. Verfahren zum Konditionieren einer Kapsel nach einem der Ansprüche 1 bis 5, umfassend die Schritte:
- Einführen des länglichen Absorptionskörpers in die Kapsel durch die Öffnung derselben;
- Verschwenken des Absorptionskörpers, um die Öffnung der Kapsel freizugeben;
- Füllen der Kapsel mit Phasenwechselmaterial durch die Öffnung;
- Verschließen der Öffnung der Kapsel.

8. Verfahren zum Konditionieren einer Kapsel nach Anspruch 4 und Anspruch 5, umfassend die Schritte:
- Füllen einer Kapsel mit Phasenwechselmaterial durch eine Öffnung derselben;
- Einführen einer Einheit, die einen länglichen Absorptionskörper (101) umfasst, der mit dem Drucksensor (115) und seinem Stopfen (114) versehen ist, in die Kapsel, bis die Öffnung der Kapsel mit dem genannten Stopfen verschlossen ist.

## Claims

1. A capsule for a refrigeration installation comprising a casing (12) of spherical overall shape filled with phase-change material, **characterized in that** the capsule contains an oblong absorption body comprising a flexible gas-filled casing (2; 102) with a main section of cylindrical overall shape ended with hemispherical ends,
the absorption body (1; 101) having a length substantially equal to an internal diameter of the casing of the capsule.

2. The capsule as claimed in claim 1, in which the casing of the capsule comprises an opening having a diameter slightly greater than a diameter of the main section of the absorption body.

3. The capsule as claimed in claim 1, in which the casing of the capsule is made from a material based on ethylene vinyl acetate.

4. The capsule as claimed in claim 1, in which the absorption body (1; 101) is associated via one of its ends with a pressure sensor (115) suited to measuring an internal pressure of the absorption body.

5. The capsule as claimed in claim 4, in which the absorption body (1; 101) is associated with a capsule closure plug (114) into which it is introduced.

6. A refrigeration installation employing capsules as claimed in any of preceding claims.

7. A method for packaging a capsule according to any of claims 1 to 5 comprising the steps of:
- introducing the oblong absorption body into a capsule via an opening thereof;
- pivoting the absorption body in order to free the opening of the capsule;
- filling the capsule with the phase-change material via the opening;
- plugging the capsule orifice.

8. A method of packaging a capsule according to claim 4 and claim 5 comprising the steps of:
- filling a capsule with phase-change material via an opening thereof;
- introducing into the capsule an assembly comprising an oblong absorption body (101) associated with the pressure sensor (115) suited and with its plug (114) until the opening of the capsule is plugged with said plug.
